(19) Europäisches Patentamt
European Patent Office
Office européen des brevets

(11) **EP 2 108 933 B1**

(12) **EUROPÄISCHE PATENTSCHRIFT**

(45) Veröffentlichungstag und Bekanntmachung des Hinweises auf die Patenterteilung:
**20.06.2018   Patentblatt 2018/25**

(51) Int Cl.:
***G01L 5/28*** *(2006.01)*

(21) Anmeldenummer: **09003843.1**

(22) Anmeldetag: **17.03.2009**

(54) **Prüfverfahren und -vorrichtung für eine Manipulatorbremse**

Testing method and device for a manipulation brake

Procédé et dispositif de contrôle pour un frein de manipulateur

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **27.03.2008   DE 102008015949**

(43) Veröffentlichungstag der Anmeldung:
**14.10.2009   Patentblatt 2009/42**

(73) Patentinhaber: **KUKA Deutschland GmbH 86165 Augsburg (DE)**

(72) Erfinder: **Hasenzahl, Torsten 89407 Dillingen (DE)**

(74) Vertreter: **Schlotter, Alexander Carolus Paul Wallinger Ricker Schlotter Tostmann Patent- und Rechtsanwälte Partnerschaft mbB Zweibrückenstrasse 5-7 80331 München (DE)**

(56) Entgegenhaltungen:
**EP-A1- 1 806 837      EP-A2- 0 924 583
EP-A2- 1 710 549      EP-B1- 1 215 475
EP-B1- 1 239 354**

EP 2 108 933 B1

**Beschreibung**

Die vorliegende Erfindung betrifft ein Verfahren und eine Vorrichtung zum Prüfen einer Bremse eines Manipulators, insbesondere eines Roboters.

Die Bewegungsachsen von Manipulatoren, insbesondere Industrie-, Leichtbau- oder Telerobotern, werden im Betrieb im Allgemeinen durch die Antriebe gebremst, die hierzu entsprechende Bremskräfte entgegen der Bewegungsrichtung aufbringen. Bremsen werden vorwiegend als Feststellbremsen zur Sicherung der Pose des stillstehenden Manipulators eingesetzt. Beispielsweise für einen schnellen Nothalt können jedoch die Bremsen auch zusätzlich zu den Antrieben oder, beispielsweise bei einem Stop 0 gemäß EN 60204, an Stelle der Antriebe zum Abbremsen des sich noch bewegenden Manipulators geschlossen werden. Insbesondere für solche Anwendungsfälle ist es erforderlich, die Funktion der Bremsen sicherzustellen.

Die EP 1 239 354 B1 schlägt hierzu ein Verfahren zum Prüfen einer Manipulatorbremse vor, nach dem eine stillstehende Achse bei geschlossener Bremse mit einem vorgegebenen Antriebsmoment beaufschlagt wird. Bewegt sich die Achse trotz geschlossener Bremse vor Erreichen bzw. Überschreiten des vorgegebenen Antriebsmoments, so wird die Bremse als nicht funktionstauglich bewertet.

Aufgrund der unterschiedlichen Werte von Haft- und Gleitreibungskoeffizienten können Bremsen regelmäßig im Stillstand Haltekräfte aufbringen, die höher sind als die eine Bewegung abbremsenden Bremskräfte im Betrieb. Ist die maximale Haftreibkraft einer Bremse überschritten, beginnt der Manipulator, sich zu bewegen, wobei die weiterhin geschlossene Bremse dieser Bewegung ein geringeres Bremsmoment entgegensetzt. Insbesondere, um die Funktion einer Bremse als Betriebsbremse, also zum Abbremsen einer Bewegung zu bewerten, ist daher das Verfahren der EP 1 239 354 B1 wenig geeignet. Besonders deutlich wird dies für geschwindigkeitsabhängige Bremsen wie Wirbelstrombremsen, die im Stillstand kein signifikantes Bremsmoment leisten.

Die EP 1 806 837 A1 und die EP 1 215 475 B1 schlagen daher jeweils ein Verfahren zum Prüfen einer Bremse vor, nach dem der Motorstrom eines drehzahlgeregelten Elektromotors nach dem Schließen der Bremse erfasst wird. Da hier der drehzahlgeregelte Elektromotor die Achse - unter Aufbringen eines entsprechend größeren Antriebsmomentes - weiter bewegt, wird im Gegensatz zur vorgenannten EP 1 239 354 B1 vorteilhaft das Betriebsdrehmoment der Bremse erfasst, das diese zum Abbremsen einer Bewegung zur Verfügung stellt - es entspricht gerade dem vom Elektromotor nach Schließen der Bremse zusätzlich zu leistenden Antriebsdrehmoment zur Aufrechterhaltung der Soll-Drehzahl.

Nachteilig werden bei diesem Test die Bremse, die schleifend durch den Elektromotor durchgedreht wird, sowie der Elektromotor, der die geschlossene Bremse überwinden und eine vorgegebene Solldrehzahl halten muss, hoch belastet. Zudem ist dieses Prüfverfahren an bisherige Robotersteuerungen angepasst, die in der Regel positionsgeregelt ausgebildet sind und auf der Vorgabe einer Sollposition bzw. - drehzahl basieren. Zunehmend werden jedoch in Manipulatoren, insbesondere in Robotern, modellbasierte Regelungen, beispielsweise Kraftregelungen eingesetzt, in denen Soll-Antriebskräfte vorgegeben werden.

Aufgabe der vorliegenden Erfindung ist es, eine Prüfung einer Bremse eines Manipulators zu verbessern.

Diese Aufgabe wird durch ein Verfahren mit den Merkmalen des Anspruchs 1 gelöst. Anspruch 12 stellt eine Vorrichtung, Anspruch 13 bzw. 14 ein Computerprogramm bzw. ein Computerprogrammprodukt zur Durchführung eines Verfahrens nach Anspruch 1 unter Schutz. Die Unteransprüche betreffen vorteilhafte Weiterbildungen. Ein erfindungsgemäßes Verfahren dient zum Prüfen einer oder mehrerer, insbesondere aller Bremsen eines Manipulators, insbesondere eines Roboters wie beispielsweise eines Industrie-, Leichtbau- oder Teleroboters. Die zu prüfende Bremse kann dabei insbesondere mechanisch, beispielsweise als Scheiben-, Trommel-, Keil- oder Backenbremse, oder elektrodynamisch, beispielsweise als Wirbelstrom- oder Lamellenbremse oder Bremsgenerator wirken. Sie kann vorzugsweise elektrisch, elektromagnetisch, elektromotorisch, hydraulisch und/oder pneumatisch durch eine Bremssteuerung aktuiert werden, die in einer bevorzugten Ausführung ebenso wie eine Prüfvorrichtung zur Durchführung eines erfindungsgemäßen Verfahrens in einer Robotersteuerung implementiert oder als separate Einrichtung vorgesehen sein kann. Der Begriff "Steuerung" umfasst vorliegend ausdrücklich auch eine Regelung.

Nach dem erfindungsgemäßen Verfahren wird eine vorgegebene Antriebskraft auf den Manipulator aufgebracht. Zur einheitlicheren Darstellung wird ein gegensinnig gleiches Kräftepaar, i.e. ein Drehmoment, im Folgenden ebenfalls als Kraft bezeichnet, so dass beispielsweise eine Antriebs- oder Bremskraft gleichermaßen ein Antriebs- bzw. Bremsdrehmoment bezeichnet und Kraftsensoren auch Drehmomentsensoren umfassen.

Das Aufbringen einer vorgegebenen Antriebskraft umfasst dabei insbesondere die Vorgabe eines zeitlichen und/oder zustandsabhängigen Verlaufs der Antriebskraft, beispielsweise einer wenigstens stückweise konstanten, insbesondere auch verschwindenden Antriebskraft, einer mit der Zeit linear, quadratisch oder gemäß einer anderen vorgegebenen Funktion größer oder kleiner werdenden Antriebskraft, oder einer Antriebskraft, die von Zustandsgrößen des Manipulators, insbesondere einer oder mehrerer Achspositionen und/oder -geschwindigkeiten abhängt. Solche Antriebskräfte können vorteilhafterweise durch kraftgeregelte Antriebe, insbesondere kraftgeregelte Elektromotoren aufgebracht werden. Dabei kann durch geeignete Vorgabe der Antriebskraft vorteilhafterweise eine Belastung der Bremse und des Antriebs bei der Prüfung reduziert werden.

Während die vorgegebene Antriebskraft auf den Manipulator aufgebracht wird, wird die zu prüfende Bremse geschlossen. Somit kann die Funktion der Bremse als Betriebsbremse, i.e. zum Abbremsen einer Bewegung überprüft werden. Bevorzugt wird die Bremse dabei vollständig geschlossen, indem etwa eine Spannung, die eine elektromagnetisch aktuierte Bremse lüftet, auf Null gesenkt wird. Gleichermaßen ist es jedoch auch möglich, die Bremse gezielt unvollständig, beispielsweise zu einem vorgegebenen Prozentsatz eines Maximalzustandes zu schließen, um die in diesem Zustand geleistete Bremswirkung zu prüfen. Hierzu kann beispielsweise die lüftende Spannung auf einen geringeren Wert abgesenkt werden, so dass die Bremse teilweise, aber noch nicht vollständig geschlossen ist. Bevorzugt können diesbezüglich auch mehrere Stellungen der Bremse geprüft werden, etwa eine Bremsleistung bei einer zu 25%, zu 50%, zu 75% und zu 100% geschlossenen Bremse, wobei 0% einer vollständig gelüfteten Bremse und 100% einer nicht gelüfteten Bremse entspricht.

Dabei und/oder anschließend wird eine Bewegung des Manipulators erfasst. Dies kann beispielsweise die Erfassung des zeitlichen Verlaufs der Position des Manipulators, also der Position bzw. Stellung einer oder mehrerer, insbesondere aller Achsen des Roboters, aber auch der Lage und/oder Orientierung eines Referenzkoordinatensystems des Manipulators, beispielsweise seines Tool Center Points (TCP) umfassen.

Hierzu können beispielsweise die Achs- oder Gelenkwinkel durch Winkelencoder oder dergleichen erfasst und, gegebenenfalls, mittels Vorwärtskinematik in kartesische Koordinaten, Denavit-Hartenberg-Parameter oder dergleichen transformiert werden.

Aus der Position kann, vorzugsweise durch ein- bzw. mehrfache numerische Differentiation, die Geschwindigkeit bzw. Beschleunigung des Manipulators bestimmt werden. Gleichermaßen kann die Geschwindigkeit auch beispielsweise durch Tachogeneratoren oder dergleichen erfasst werden. Die Beschleunigung kann beispielsweise hieraus durch numerische Differentiation gewonnen oder durch Beschleunigungssensoren oder dergleichen ihrerseits erfasst werden. Grundsätzlich sind auch noch höhere Zeitableitungen, beispielsweise ein Ruck des Manipulators als Zeitableitung seiner Beschleunigung denkbar, so dass allgemein die Bewegung des Manipulators seine Position, Geschwindigkeit, Beschleunigung und/oder noch höhere Zeitableitungen, jeweils im Koordinatenraum der Gelenk- bzw. Achspositionen und/oder im kartesischen Arbeitsraum des Manipulators umfassen kann.

Auf Basis dieser erfassten Bewegung wird nun erfindungsgemäß die Bremse bewertet. Denn die (wenigstens teilweise) geschlossene Bremse übt eine Bremskraft $\tau_B$ auf den Manipulator aus, die zusammen mit den weiteren auf ihn wirkenden Kräften, insbesondere der (vorgegebenen) Antriebskraft $\tau_A$, der Gewichtskraft, einer Reibkraft, gyroskopischen Kräften wie Zentrifugal- und Corioliskraft und dergleichen, die Bewegung des Manipulators gemäß

$$M \frac{d^2q}{dt^2} + h\left(q, \frac{dq}{dt}, t\right) = \tau_A - \tau_B \qquad (1)$$

bestimmen, wobei M die generalisierte Massenmatrix, $d^nq/dt^n$ die n-te Zeitableitung der generalisierten Koordinaten, beispielsweise der Gelenkpositionen, und h den Vektor der übrigen generalisierten Kräfte bezeichnet. Die von der zu prüfenden Bremse aufgebrachte Bremskraft beeinflusst daher die Beschleunigung und entsprechend insgesamt die Bewegung des Manipulators. Bringt beispielsweise eine vollständig geschlossene Bremse eine sehr hohe Betriebsbremskraft auf, so erfährt der Manipulator eine entsprechende hohe negative Beschleunigung.

Zur Bewertung der Bremse auf Basis der erfassten Bewegung wird daher in einer Ausführung der vorliegenden Erfindung eine die Bewegung beschreibende Größe, insbesondere die Position, Geschwindigkeit und/oder Beschleunigung des Manipulators mit einem zulässigen Grenzwert verglichen. Liegt beispielsweise die durch die Bremse erzielte negative Beschleunigung über einem von der Bremse im Betrieb mindestens zu erreichenden Verzögerung, wird die Bremse als funktionstüchtig bewertet. Zusätzlich oder alternativ kann die Bewertung auch auf Basis der Geschwindigkeit erfolgen, indem beispielsweise erfasst wird, ob eine gebremste Bewegung trotz beschleunigender Kräfte durch Antrieb, Gravitation oder dergleichen eine zulässige Geschwindigkeit nicht überschreitet.

Zusätzlich oder alternativ wird in einer weiteren Ausführung der vorliegenden Erfindung auf Basis der erfassten Bewegung eine von der Bremse auf den Manipulator aufgebrachte Bremskraft bestimmt und mit einem zulässigen Grenzwert verglichen. Insbesondere, wenn die weiteren auf den Manipulator wirkenden Kräfte bekannt sind, wie dies beispielsweise bei der vorgegebenen Antriebskraft oder der von der Stellung abhängigen Gewichtskraft der Fall ist, oder vernachlässigt werden dürfen, wie dies beispielsweise für Lagerreibungen, Luftwiderstand und dergleichen angenommen werden kann, kann gemäß Gleichung (1) die Bremskraft $\tau_B$ aus der erfassten Bewegung bestimmt und überprüft werden, ob diese Bremskraft eine von der Bremse im Betrieb mindestens zu erreichenden Bremskraft erreicht oder übersteigt.

Der vorstehend genannte Grenzwert für eine Bewegung, insbesondere Beschleunigung, bzw. Bremskraft kann einer mit einem Sicherheitsfaktor multiplizierten Sollgröße für die Bremse entsprechen. Soll beispielsweise eine Bremse eine Achse des Manipulators bei Höchstgeschwindigkeit innerhalb einer vorgegebenen Zeit stillsetzen können, kann der Grenzwert durch Division dieser vorgegebenen Zeit durch einen Sicherheitsfaktor größer eins erhalten werden.

In einer bevorzugten Ausführung der vorliegenden Erfindung kann die die Bewegung beschreibende Größe und/oder die auf Basis der erfassten Bewegung bestimmte Bremskraft auch dadurch mit dem Grenzwert verglichen werden, dass ein Quotient mit diesem Grenzwert gebildet wird, der somit die Güte der Bremse in Relation zu dem dann als Referenzwert dienenden Grenzwert, beispielsweise in Prozent, angibt. So kann vorteilhaft eine Bremse, die beispielsweise 150% der erforderlichen Mindestverzögerung erzielt und somit große Sicherheitsreserven aufweist, von einer Bremse unterschieden werden, die 100% der erforderlichen Mindestverzögerung erzielt, also nur gerade noch als funktionstüchtig zu bewerten ist. Auf diese Weise können insbesondere Sicherheitsreserven der Bremse erfasst werden. In dieser bevorzugten Ausführung wird daher die Bremse nicht nur binär in "funktionstauglich" oder "nicht funktionstauglich" klassifiziert, sondern ihre Güte feiner bewertet, beispielsweise in "nicht funktionstauglich", "gerade noch funktionstauglich", "funktionstauglich mit kleiner Sicherheitsreserve", "funktionstauglich mit großer Sicherheitsreserve" und dergleichen, wobei einzelne Bereiche des Quotienten verschiedenen Güteklassen zugeordnet oder der Quotient als solches die Güte der Bremse definiert.

Zu diesem Zweck können alternativ die Bewegung beschreibende Größe und/oder die auf Basis der erfassten Bewegung bestimmte Bremskraft auch mit verschiedenen Grenzwerten verglichen und so klassifiziert werden, indem etwa die Grenzwerte sukzessive größer bzw. kleiner werden und beispielsweise eine Bremse, deren Bremskraft auch einen zweiten, größeren Grenzwert übersteigt, besser bewertet wird als eine Bremse, deren Bremskraft nur einen ersten, kleineren Grenzwert übersteigt, nicht mehr jedoch den zweiten, größeren.

Die auf den Manipulator aufgebrachte Antriebskraft kann derart vorgegeben werden, dass der Manipulator seine Bewegungsrichtung und/oder Bewegungsgeschwindigkeit ändert. Insbesondere bei Drehungen um eine von der Vertikalen abweichenden Achse wirkt die Gewichtskraft in einer Bewegungsrichtung bremsend, in der anderen beschleunigend. Wird die Antriebskraft derart vorgegeben, dass der Manipulator beide Bewegungsrichtungen durchläuft, und dabei jeweils die Bremse geschlossen und die Bewegung des Manipulators erfasst, können die Gravitationseinflüsse kompensiert werden. Wird beispielsweise ein Glied eines Manipulators in einer ersten Bewegung q1 (t) um die Horizontale nach oben geschwenkt, so dass die Gewichtskraft eine rückstellende Kraft $-\tau_G$ bewirkt, und anschließend in einer gegensinnigen Bewegung q2(t) um die Horizontale nach unten geschwenkt, so dass aus der Gewichtskraft eine beschleunigende Kraft $\tau_G$ resultiert, kann aus Gleichung (1) die wirkende Gewichtskraft eliminiert und so die tatsächlich wirkende Bremskraft $\tau_B$ bestimmt werden.

Dies kann an einem sehr einfachen Beispiel verdeutlicht werden. Soll die als Bremse wirkende Gleitreibung $\tau_B = \mu \times m \times g \times \cos(\alpha)$ eines Klotzes, der durch die konstante Kraft F auf einer unter $\alpha$ geneigten schiefen Ebene bewegt wird, bewertet werden, wobei m seine Masse, g die Gravitationskonstante und $\mu$ den Gleitreibungskoeffizienten bezeichnen, so wird seine Beschleunigung $d^2q1/dt^2$ in Richtung der schiefen Ebene bei Bergaufziehen mit F, die sich aus

$$m\frac{d^2q1}{dt^2} = F - mg\sin(\alpha) - \mu mg\cos(\alpha) \qquad (2)$$

ergibt, mit der Beschleunigung $d^2q2/dt^2$ verglichen, die sich beim Bergabziehen mit dieser Kraft ergibt

$$m\frac{d^2q2}{dt^2} = -F - mg\sin(\alpha) + \mu mg\cos(\alpha) \qquad (3).$$

Durch Subtraktion beider erfassten Bewegungen ergibt sich bei bekannter Zugkraft F und erfasster Beschleunigung $d^2q/d^f$ die wirkende Gleitreibung bzw. Bremskraft zu

$$\underbrace{\mu mg\cos(\alpha)}_{\tau_B} = \underbrace{F}_{\tau_A} - \frac{m}{2}\left[\frac{d^2q1}{dt^2} - \frac{d^2q2}{dt^2}\right] \quad (4).$$

Eine Änderung der Bewegungsgeschwindigkeit erlaubt die Bewertung der Bremse als Betriebsbremse für verschiedene Geschwindigkeitsbereiche. Da beispielsweise der Gleitreibungskoeffizient einer Reibbremse ebenso wie das induzierte Widerstandsdrehmoment einer Wirbelstrombremse geschwindigkeitsabhängig sind, kann so die Eignung der Bremse als Betriebsbremse für verschiedene Geschwindigkeiten des Manipulators geprüft werden. Gleichermaßen kann das erfindungsgemäße Verfahren auch nacheinander mit verschieden großen Antriebskräften, die zu verschieden schnellen Bewegungen des Manipulators führen, durchgeführt werden.

Die auf den Manipulator aufgebrachte Antriebskraft kann im Wesentlichen einer Prüfkraft der Bremse, insbesondere einer mit einem Sicherheitsfaktor multiplizierten Mindestbetriebskraft der Bremse entsprechen. Wird beispielsweise ein Arm eines Manipulators um die Vertikale mit dem 1,3-fachen des vorgeschriebenen Bremsdrehmomentes geschwenkt und die auf diese Achse wirkende Bremse geschlossen, so muss der Arm darauf mit einem entsprechenden Abbremsen reagieren. Je nachdem, ob und gegebenenfalls um das Wievielfache dieses Abbremsen einer vorgeschriebenen Mindestverzögerung entspricht, wird dann die Bremse bewertet.

Die Bremse kann in einer bevorzugten Ausführung ein- oder mehrfach geschlossen und anschließend wieder geöffnet werden, während die Bewegung des Manipulators erfasst wird. Hierdurch wird zum einen die vorstehend erläuterte Umkehrung der Bewegungsrichtung erleichtert, zum anderen kann auch sogenanntes Bremsfading, insbesondere das Nachlassen der Bremswirkung mit der Anzahl der Bremsungen bewertet werden.

Das erfindungsgemäße Verfahren kann in vorgegebenen Zeitabständen wiederholt werden, wobei die dabei gewonnenen Bewertungen der Bremse, insbesondere zusammen mit Zustandsparametern während der Bewertung, gespeichert werden können. Solche Zustandsparameter können beispielsweise Position und/oder Geschwindigkeit des Manipulators, Temperatur, gegriffene Nutzlast, Zeitpunkt der Bewertung und dergleichen umfassen. Somit kann die Historie der Bewertungen protokolliert werden. In einer bevorzugten Weiterbildung kann auf Basis dieses Bewertungsprotokolls, beispielsweise durch geeignete, insbesondere lineare oder exponentielle Extrapolation der Bewertungen über der Zeit, auch eine Prognose für die Bremse erstellt werden. Sinkt beispielsweise die vorstehend mit Bezug auf einen Referenzwert beschriebene Bremsgüte über äquidistante Bewertungen von 150% über 140%, 130%, 120% auf 110%., so kann prognostiziert werden, dass diese Bremse zum Zeitpunkt der nächsten Messung gerade noch funktionstauglich sein wird, danach nicht mehr. Hierdurch kann frühzeitig Verschleiß der Bremse erkannt und ein und Versagen verhindert werden.

Mehrere Bremsen des Manipulators können gemäß dem vorstehend beschriebenen Verfahren nacheinander oder gleichzeitig geschlossen werden, während vorgegebene Antriebskräfte auf den Manipulator aufgebracht und seine Bewegungen erfasst werden. Durch das gleichzeitige Schließen kann eine zeitsparende Prüfung der auf verschiedene Achsen wirkenden Bremsen durchgeführt werden. Durch das Prüfen einzelner Achsen nacheinander kann hingegen insbesondere eine gegenseitige Beeinflussung der Prüfergebnisse vermieden werden.

Weitere Vorteile und Merkmale ergeben sich aus den Unteransprüchen und den Ausführungsbeispielen. Hierzu zeigt, teilweise schematisiert:

Fig. 1: einen Roboter mit einer Prüfvorrichtung nach einer Ausführung der vorliegenden Erfindung;

Fig. 2: die Position eines Armes des Roboters gemäß Fig. 1 während des Verfahrens gemäß Fig. 3; und

Fig. 3: den Ablauf eines Bremsprüfungsverfahrens nach einer Ausführung der vorliegenden Erfindung.

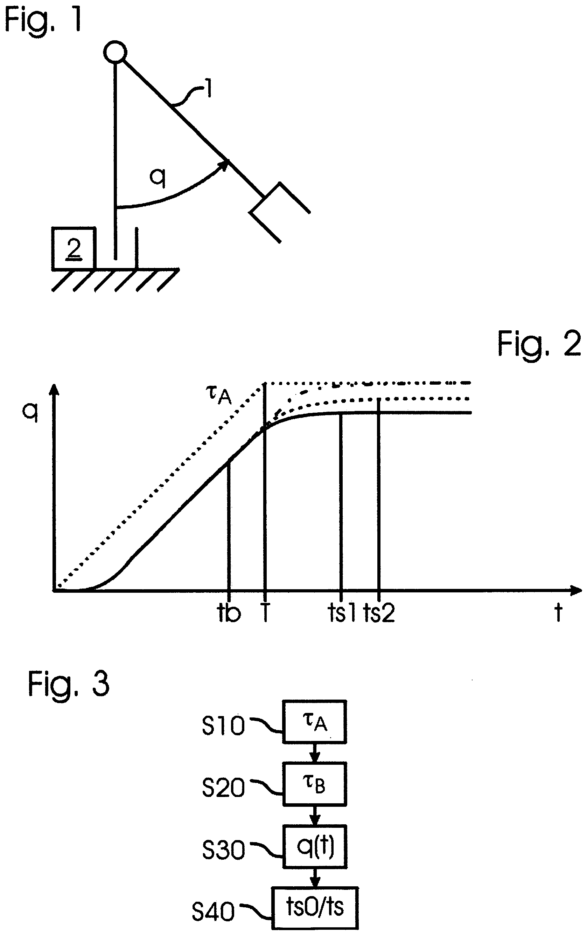

Fig. 1 zeigt einen zweigliedrigen Roboter 1 mit einem um die Vertikale drehbaren Rumpf, einem daran um die Horizontale drehbaren Arm und einer in der nicht näher dargestellten Steuerung 2 des Roboters 1 implementierten Prüfvorrichtung nach einer Ausführung der vorliegenden Erfindung zur Durchführung des nachfolgend näher anhand der Fig. 3 beschriebenen Verfahrens. Der Gelenkwinkel q des Armes gegen die Vertikale beschreibt in für die folgenden Erläuterungen ausreichender Weise die Position des Roboters 1.

Bezüglich dieser Position wird gemäß (1) die Bewegung des Roboterarmes unter Vernachlässigung weiterer Einflüsse beschrieben durch

$$\underbrace{ml^2}_{M}\frac{d^2q}{dt^2}+\underbrace{mgl\sin(q)}_{h\left(q,\frac{dq}{dt},t\right)}=\underbrace{mgl\left(\frac{t}{T}\right)}_{\tau_A}-\tau_B \ (1')$$

wobei m die Masse des Armes und I seine Schwerpunktlage beschreibt. In einem ersten Schritt S10 (vgl. Fig. 3) wird durch einen Antrieb der Horizontalachse (nicht dargestellt) ein über der Zeit t vorgegebenes Antriebsdrehmomentes $\tau_A$ auf den Arm aufgebracht, das zunächst bis zum Zeitpunkt T linear zunimmt (vgl. (1')) und ab t = T dem Gewichtskraftdrehmoment mgl des horizontal ausgestreckten Armes entspricht, wie in Fig. 2 punktiert dargestellt.

Ohne Bremsen ($\tau_B(t) = 0$) würde der Arm vereinfacht in der in Fig. 2 strichpunktiert angedeutet Weise nach oben schwenken: zunächst beginnt der Arm - aufgrund seiner Trägheit verzögert - dem wachsendem Antriebsdrehmoment zu folgen. Etwa ab 45° übersteigt das rücktreibende Gewichtskraftdrehmoment das Antriebsdrehmoment und bremst die Bewegung ab. Am Ende der Bewegung halten sich Antriebs- und Gewichtskraftdrehmoment das Gleichgewicht, so dass der Arm keine Beschleunigung mehr erfährt, sondern im Kräfte- und Momentengleichgewicht ist

Gemäß eines Bremsprüfungsverfahrens nach einer Ausführung der vorliegenden Erfindung, dessen Ablauf in Fig. 3 skizziert ist, wird in einem Schritt S20 zum Zeitpunkt tb die auf die Drehachse des Armes wirkende Bremse (nicht dargestellt) geschlossen. Diese ist im Ausführungsbeispiel als mechanische, elektromagnetisch gelüftete Backenbremse ausgebildet, deren Backen auf den Rotor des als Elektromotors ausgebildeten Antriebs der Armachse wirken und ein der Bewegungsrichtung entgegengesetztes Betriebsbremsdrehmoment $\tau_B$ auf diesen ausüben. Dieses ist bei sich drehendem Rotor geringfügig geschwindigkeitsabhängig, kann jedoch vereinfacht als konstant betrachtet werden und ist jedenfalls aufgrund des gegenüber dem Haftreibungskoeffizienten $\mu_0$ kleineren Gleitreibungskoeffizienten $\mu$ zwischen Backen und Rotor geringer als ein durch die Bremse maximal aufbringbares Haltemoment.

Dementsprechend hebt sich, wie in Fig. 2 durchgezogen dargestellt, ab dem zeitpunkt tb der Arm zunehmend langsamer, da dem abnehmenden Antriebsdrehmoment $\tau_A$ nun sowohl das zunehmende Gewichtskraftdrehmoment als auch das Bremsdrehmoment $\tau_B$ entgegenwirken. Daher kommt der Arm zum Zeitpunkt ts1 zum Stillstand, ohne die horizontal ausgestreckte Position zu erreichen (Fig. 2).

Übt die Bremse, beispielsweise aufgrund Verschleißes, bei demselben Prüfablauf nur ein geringeres Bremsdrehmoment $\tau_B$ auf die Horizontalachse des Roboters 1 aus, so kommt der Arm entsprechend zu einem späteren Zeitpunkt ts2 und in einer höheren Position zum Stillstand, wie dies in Fig. 2 strichliert eingezeichnet ist. Sowohl die Zeit ts bis zum Stillstand als auch die dabei erreichte Position q(ts) stellen somit, ebenso wie beispielsweise die hierbei auftretende Verzögerung $d^2q/dt^2$ ein Maß für die Güte der Bremse, insbesondere ihre Funktion als Betriebsbremse dar. Daher wird in einem Schritt S30 der Gelenkwinkel q(t) des Armes aufgezeichnet und in einem Schritt S40 die Bremse auf Basis dieser erfassten Bewegung bewertet.

Hierzu wird beispielsweise eine bei dieser Prüfung minimal zu erreichende Zeit bis zum Stillstand ts0 durch die erreichte Zeit ts dividiert. Dieser Quotient ts0/ts stellt ein proportionales Maß für die Güte der Bremse dar, wobei ein Quotient ts0/ts < 1 einer nicht funktionstauglichen Bremse, ein Quotient ts0/ts ≈ 1 einer gerade noch funktionstauglichen Bremse, der Quotient ts0/ts2 = 120% (strichliert in Fig. 2) einer funktionstauglichen Bremse mit kleiner Sicherheitsreserve und der Quotient ts0/ts1 = 150% (durchgezogen in Fig. 2) einer funktionstauglichen Bremse mit großer Sicherheitsreserve entspricht.

Diese Bewertung wird zusammen mit der Temperatur und dem Zeitpunkt der Prüfung aufgezeichnet und die Prüfung in vorgegebenen Zeitintervallen wiederholt. Liegen beispielsweise zwischen den in Fig. 2 durchgezogen bzw. strichliert dargestellten Prüfungen 200 Tage Normalbetrieb des Roboters 1, kann extrapoliert werden, dass die Bremse nach weiteren 300 Tagen Normalbetrieb nicht mehr funktionstauglich sein wird.

Bezuaszeichenliste

| | |
|---|---|
| 1 | Roboter |
| q | Position (Gelenkwinkel) |
| $\tau_A$ | Antriebsdrehmoment |
| $\tau_B$ | Betriebsbremsdrehmoment |
| t | Zeit |
| tb | Schließen der Bremse |
| ts1, ts2 | Zeit bis Stillstand |
| T | Zeitkonstante Antriebsdrehmoment |

**Patentansprüche**

1. Verfahren zum Prüfen einer Bremse eines Manipulators, insbesondere eines Roboters (1), mit den Schritten:

   - Aufbringen einer vorgegebenen Antriebskraft ($\tau_A$) auf den Manipulator (S10);
   - Schließen der Bremse (S20);
   - Erfassen der Bewegung (q; dq/dt; $d^2q/dt^2$) des Manipulators (S30); und
   - Bewerten der Bremse auf Basis der erfassten Bewegung (S40).

2. Verfahren nach Anspruch 1, **dadurch gekennzeichnet, dass** die auf den Manipulator aufgebrachte Antriebskraft derart vorgegeben ist, dass der Manipulator seine Bewegungsrichtung und/oder Bewegungsgeschwindigkeit während der Prüfung ändert

3. Verfahren nach einem der vorhergehenden Ansprüche, **dadurch gekennzeichnet, dass** die auf den Manipulator aufgebrachte Antriebskraft im Wesentlichen einer Prüfkraft der Bremse, insbesondere einer mit einem Sicherheitsfaktor multiplizierten Mindestbetriebskraft der Bremse entspricht.

4. Verfahren nach einem der vorhergehenden Ansprüche, **dadurch gekennzeichnet, dass** die Bremse ein- oder mehrfach geschlossen und anschließend wieder geöffnet wird, während die Bewegung des Manipulators erfasst wird.

5. Verfahren nach einem der vorhergehenden Ansprüche, **dadurch gekennzeichnet, dass**, während die vorgegebene Antriebskraft auf den Manipulator aufgebracht wird, die Bremse vollständig oder unvollständig geschlossen wird, insbesondere im Wesentlichen zu 25%, 50%, 75% und/oder 100%, wobei 0% einer vollständig gelüfteten Bremse und 100% einer nicht gelüfteten Bremse entspricht.

6. Verfahren nach einem der vorhergehenden Ansprüche, **dadurch gekennzeichnet, dass** zur Erfassung der Bewegung des Manipulators dessen Position (q), Geschwindigkeit (dq/dt) und/oder Beschleunigung ($d^2q/dt^2$) erfasst wird.

7. Verfahren nach einem der vorhergehenden Ansprüche, **dadurch gekennzeichnet, dass** die Bremse auf Basis der erfassten Bewegung bewertet wird, indem eine die Bewegung beschreibende Größe, insbesondere die Position, Geschwindigkeit und/oder Beschleunigung des Manipulators mit einem Grenzwert verglichen wird.

8. Verfahren nach einem der vorhergehenden Ansprüche, **dadurch gekennzeichnet, dass** auf Basis der erfassten Bewegung eine von der Bremse auf den Manipulator aufgebrachte Bremskraft ($\tau_B$) bestimmt und mit einem Grenzwert verglichen wird.

9. Verfahren nach einem der vorhergehenden Ansprüche 7 bis 8, **dadurch gekennzeichnet, dass** der Grenzwert einer mit einem Sicherheitsfaktor multiplizierten Sollgröße für die Bremse oder einem Referenzwert entspricht.

10. Verfahren nach einem der vorhergehenden Ansprüche, **dadurch gekennzeichnet, dass** es in vorgegebenen Zeitabständen wiederholt wird, und die dabei gewonnenen Bewertungen der Bremse, insbesondere zusammen mit Zustandsparametern während der Bewertung, gespeichert werden.

11. Verfahren nach einem der vorhergehenden Ansprüche, **dadurch gekennzeichnet, dass** mehrere Bremsen des Manipulators nacheinander oder gleichzeitig geschlossen werden, während vorgegebene Antriebskräfte ($\tau_A$) auf den Manipulator aufgebracht und seine Bewegungen erfasst werden.

12. Prüfvorrichtung für einen Manipulator, insbesondere einen Roboter (1), mit:

einer Antriebssteuerung zum Aufbringen einer vorgegebenen Antriebskraft ($\tau_A$) auf den Manipulator;
einer Bremssteuerung;
einer Erfassungseinrichtung zum Erfassen der Bewegung (q; dq/dt; $d^2q/dt^2$) des Manipulators;
**dadurch gekennzeichnet, dass**
die Prüfvorrichtung zur Durchführung eines Verfahrens nach einem der vorhergehenden Ansprüche eingerichtet ist.

13. Computerprogramm, das ein Verfahren nach einem der Ansprüche 1 bis 11 ausführt, wenn es in einer Prüfvorrichtung nach Anspruch 12 abläuft.

14. Computerprogrammprodukt mit Programmcode, der auf einem maschinenlesbaren Träger gespeichert ist und ein Computerprogramm nach Anspruch 13 umfasst.

**Claims**

1. A method of testing a brake of a manipulator, in particular of a robot (1), the method comprising the steps of:

- applying a specified driving force ($\tau_A$) onto the manipulator (S10);
- closing the brake (S20);
- detecting the movement (q; dq/dt; $d^2q/dt^2$) of the manipulator (S30); and
- assessing the brake on the basis of the detected movement (S40).

**2.** The method according to claim 1, **characterized in that** the driving force applied onto the manipulator is specified in such a way that the manipulator changes its direction of movement and/or its speed of movement during the test.

**3.** The method according to any one of the preceding claims, **characterized in that** the driving force applied onto the manipulator substantially corresponds to a test force of the brake, in particular a minimum operating force of the brake multiplied by a safety factor.

**4.** The method according to any one of the preceding claims, **characterized in that** the brake is closed and subsequently re-opened once or multiple times while the movement of the manipulator is being detected.

**5.** The method according to any one of the preceding claims, **characterized in that**, while the specified driving force is applied onto the manipulator, the brake is completely or not completely closed, in particular substantially at 25 %, 50%, 75 % and/or 100 %, wherein 0 % corresponds to a completely vented brake and 100 % corresponds to a completely non-vented brake.

**6.** The method according to any one of the preceding claims, **characterized in that**, in order to detect the movement of the manipulator, its position (q), speed (dq/dt) and/or its acceleration ($d^2q/dt^2$) is detected.

**7.** The method according to any one of the preceding claims, **characterized in that** the brake is assessed on the basis of the detected movement through a comparison of a variable describing the movement, in particular the position, speed and/or acceleration of the manipulator with a threshold value.

**8.** The method according to any one of the preceding claims, **characterized in that** a braking force ($\tau_B$) applied by the brake onto the manipulator is determined on the basis of the detected movement and compared with a threshold value.

**9.** The method according to any one of the preceding claims 7 to 8, **characterized in that** the threshold value corresponds to a target variable for the brake multiplied by a safety factor, or to a reference value.

**10.** The method according to any one of the preceding claims, **characterized in that** the method is repeated in specified time intervals and the thus obtained assessments of the brake are stored, in particular together with state parameters during the assessment.

**11.** The method according to any one of the preceding claims, **characterized in that** several brakes of the manipulator are closed one after the other or simultaneously while specified driving forces ($\tau_B$) are applied onto the manipulator and its movements are detected.

**12.** A testing device for a manipulator, in particular a robot (1), comprising:

a driving controller for applying a specified driving force ($\tau_A$) onto the manipulator;
a brake controller;
a detection device for detecting the movement (q; dq/dt; $d^2q/dt^2$) of the manipulator;
**characterized in that**
the testing device is arranged for carrying out a method according to any one of the preceding claims.

**13.** A computer program which carries out a method according to any one of the claims 1 to 11 when it is run on a testing device according to claim 12.

**14.** A computer program product with program code which is stored on a machine-readable medium and which comprises a computer program according to claim 13.

**Revendications**

**1.** Procédé de contrôle d'un frein d'un manipulateur, en particulier d'un robot (1), avec les étapes de :

- application d'une force d'entraînement prédéfinie ($\tau_A$) sur le manipulateur (S10) ;
- fermeture du frein (S20) ;

- détection du déplacement (q ; dq/dt ; $d^2q/dt^2$) du manipulateur (S30) ; et
- évaluation du frein sur la base du déplacement détecté (S40).

2. Procédé selon la revendication 1, **caractérisé en ce que** la force d'entraînement appliquée sur le manipulateur est prédéfinie de sorte que le manipulateur modifie son sens de déplacement et/ou sa vitesse de déplacement pendant le contrôle.

3. Procédé selon l'une quelconque des revendications précédentes, **caractérisé en ce que** la force d'entraînement appliquée sur le manipulateur correspond sensiblement à une force de contrôle du frein, en particulier à une force de service minimum du frein multipliée par un facteur de sécurité.

4. Procédé selon l'une quelconque des revendications précédentes, **caractérisé en ce que** le frein est fermé une ou plusieurs fois et ensuite à nouveau ouvert, pendant que le déplacement du manipulateur est détecté.

5. Procédé selon l'une quelconque des revendications précédentes, **caractérisé en ce que** pendant que la force d'entraînement prédéfinie est appliquée sur le manipulateur, le frein est fermé complètement ou incomplètement, en particulier sensiblement à 25 %, 50 %, 75 % et/ou 100 %, dans lequel 0 % correspond à un frein entièrement desserré et 100 % à un frein serré.

6. Procédé selon l'une quelconque des revendications précédentes, **caractérisé en ce que** pour la détection du déplacement du manipulateur, sa position (q), sa vitesse (dq/dt) et/ou son accélération ($d^2q/dt^2$) est détectée.

7. Procédé selon l'une quelconque des revendications précédentes, **caractérisé en ce que** le frein est évalué sur la base du déplacement détecté, par le fait qu'une grandeur décrivant le déplacement, en particulier la position, la vitesse et/ou l'accélération du manipulateur est comparée avec une valeur limite.

8. Procédé selon l'une quelconque des revendications précédentes, **caractérisé en ce qu'**une force de freinage ($\tau_B$) appliquée sur le manipulateur par le frein est déterminée sur la base du déplacement détecté et comparée avec une valeur limite.

9. Procédé selon l'une quelconque des revendications précédentes 7 à 8, **caractérisé en ce que** la valeur limite correspond à une grandeur de consigne pour le frein multipliée par un facteur de sécurité ou à une valeur de référence.

10. Procédé selon l'une quelconque des revendications précédentes, **caractérisé en ce qu'**il est répété à des intervalles de temps prédéfinis, et les évaluations ainsi obtenues du frein, en particulier avec des paramètres d'état pendant l'évaluation, sont enregistrées.

11. Procédé selon l'une quelconque des revendications précédentes, **caractérisé en ce que** plusieurs freins du manipulateur sont fermés l'un après l'autre ou simultanément, pendant que des forces d'entraînement prédéfinies ($\tau_A$) sont appliquées sur le manipulateur et ses déplacements détectés.

12. Dispositif de contrôle pour un manipulateur, en particulier un robot (1), avec :

une commande d'entraînement pour l'application d'une force d'entraînement prédéfinie ($\tau_A$) sur le manipulateur ;
une commande de frein ;
un dispositif de détection pour la détection du déplacement (q ; dq/dt ; $d^2q/dt^2$) du manipulateur;
**caractérisé en ce que**
le dispositif de contrôle est aménagé pour la réalisation d'un procédé selon l'une quelconque des revendications précédentes.

13. Programme informatique, qui exécute un procédé selon l'une quelconque des revendications 1 à 11, lorsqu'il se déroule dans un dispositif de contrôle selon la revendication 12.

14. Produit de programme informatique avec code de programme, qui est enregistré sur un support lisible par machine et comprend un programme informatique selon la revendication 13.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1239354 B1
- EP 1806837 A1
- EP 1215475 B1